# FASCICULE DE BREVET EUROPEEN

(11) **EP 3 631 781 B1**
(45) Date de publication et mention de la délivrance du brevet: **30.06.2021**
(21) Numéro de dépôt: 18725566.6
(22) Date de dépôt: 28.05.2018
(51) Int. Cl.: G09B 9/12, G09B 9/14

(54) **DISPOSITIF DE SÉCURISATION DES MOUVEMENTS ÉLECTRIQUES DE PLATEFORMES MOBILES POUR SIMULATEURS**
VORRICHTUNG ZUR ERHÖHUNG DER SICHERHEIT DER ELEKTRISCHEN BEWEGUNGEN VON BEWEGLICHEN PLATTFORMEN FÜR SIMULATOREN
DEVICE FOR MAKING THE ELECTRICAL MOVEMENTS OF MOVING PLATFORMS FOR SIMULATORS SAFER

(30) Priorité: 01.06.2017 FR 1700585
(43) Date de publication de la demande: 08.04.2020
(73) Titulaire: Thales, 92400 Courbevoie (FR)
(72) Inventeur: LE GUILLOU, René, 78310 Maurepas (FR); BONNET, Maximme, 78000 Versailles (FR)
(74) Mandataire: Marks & Clerk France
(86) Numéro de dépôt international: PCT/EP2018/063928
(87) Numéro de publication internationale: WO 2018/219864

(56) Documents cités:
- EP-A1- 0 551 197
- EP-A1- 2 960 890
- EP-A2- 2 407 954

## Description

### Domaine technique

L'invention concerne le domaine des actionneurs linéaires, et en particulier concerne un dispositif pour de tels actionneurs, adapté pour sécuriser les mouvements de plateformes mobiles. L'invention s'applique notamment dans le domaine des simulateurs de vol, aux plateformes mobiles ayant six degrés de liberté animées par un positionneur hexapode.

### Etat de la technique

Les cabines de simulateurs de vol sont soumises à des mouvements qui nécessitent des performances importantes et notamment des vitesses élevées. La cabine est montée sur une plateforme mobile qui est mise en mouvement par un système qui peut être animé par différentes motorisations. Il existe différents types de plateforme mobile pour simulateurs dont une appelée plateforme de Stewart basée sur l'utilisation d'un positionneur hexapode permettant un mouvement à six degrés de liberté. Un positionneur hexapode comprend généralement six jambes ou actionneurs linéaires reliant un plateau mobile à un socle fixe. Les jambes sont actionnées pour changer de longueur et varier l'orientation du plateau. Dans les positionneurs hexapodes connus, chaque actionneur comprend un vérin linéaire articulé à chacune de ses extrémités sur le socle fixe et sur le plateau mobile. Les vérins sont généralement massifs et embarquent leur propre système de motorisation. Le réglage coordonné de la longueur de chacune des six jambes permet de déplacer le plateau mobile selon six degrés de liberté.

La plateforme d'un simulateur de vol doit supporter des masses importantes (visuel de simulation embarqué, cabine, structures porteuses) pouvant aller au-delà de 15 tonnes, et de fait lors des déplacements de la cabine, les énergies mises en jeu sont considérables. Les systèmes industriels devant répondre à des critères de qualifications, en particulier pour l'industrie avionique ceux définis par des organismes de certification, notamment la « Fédéral Aviation Administration » (FAA) et la « Joint Aviation Authorities » (JAA), il est impératif lors des mouvements de la plateforme d'assurer la sécurité tant du matériel que des personnes. Aussi, la plateforme doit être conçue pour amortir les chocs afin de protéger la mécanique et limiter l'accélération pour protéger les personnes, en particulier lors de pannes extrêmes. L'un des risques de choc parmi les plus défavorables est celui d'une panne extrême qui a pour conséquence d'emmener l'ensemble de la structure à vitesse maximum sur les butées des vérins. Les énergies mises en jeu en cas de panne extrême sont de deux ordres :
- l'énergie cinétique proportionnelle à l'inertie et au carré de la vitesse, et
- l'énergie motrice lors de la phase d'arrêt.

Les vérins hydrauliques qui sont principalement utilisés dans l'industrie lourde pour mobiliser des charges supérieures à plus de quatorze tonnes, intègrent généralement des amortisseurs de chocs hydrauliques. Ces derniers fonctionnent par la conversion de l'énergie cinétique en énergie thermique par pressurisation du fluide à travers des orifices calibrés ou dans des cônes. Ils permettent de comprimer progressivement un volume d'huile afin d'absorber progressivement des énergies importantes, de les dissiper et de décélérer avec une décélération constante, un effort constant et de réduire les contraintes au maximum (de tels vérins hydrauliques sont connus du document EP0551197).

Cependant depuis quelques années, tant face à la recherche de solutions « green » plus écologiques, que celle de la réduction de la consommation électrique, les vérins hydrauliques sont remplacés par des vérins électriques qui de surcroît présentent une consommation électrique inférieure à celle des systèmes hydrauliques (ou de la centrale des vérins hydrauliques (de tels vérins électriques sont connus du document EP2407954).

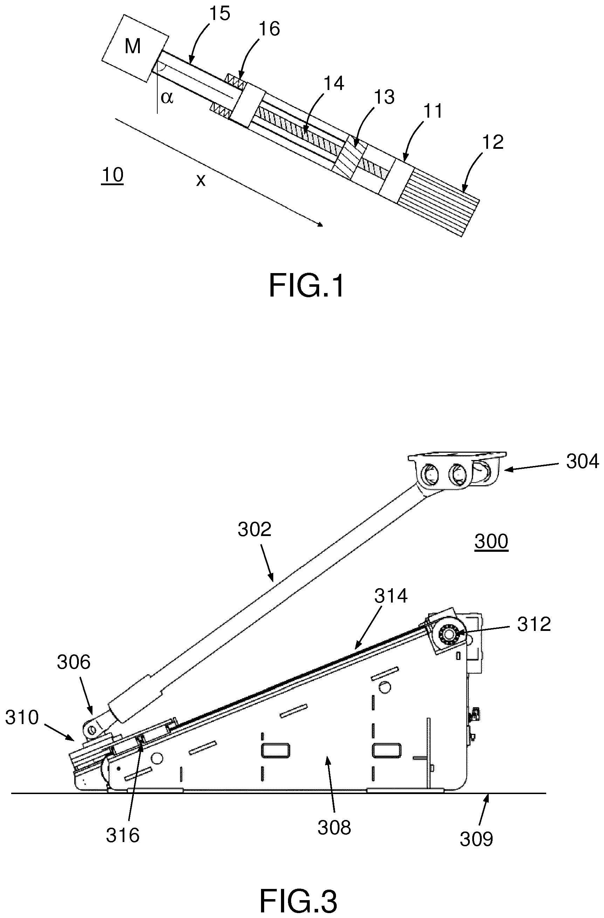

Or l'intégration d'éléments de sécurité dans les actionneurs avec vérins électriques est très contraignante, du fait de leur conception et leur encombrement. La figure 1 illustre schématiquement un vérin électrique 10 avec vis à billes qui comprend généralement un corps 11 dans lequel se trouvent en série, un moteur 12, un écrou 13, une vis 14. Le moteur fait tourner la vis, l'écrou étant bloqué en rotation il se déplace linéairement, fait sortir une tige 15 et déplace linéairement une charge M. Un amortisseur 16 est positionné en haut du corps pour limiter et ralentir la course de la charge M lors d'un mouvement vers le bas. Compte tenu de son emplacement cet amortisseur est peu performant et est très spécifique, les efforts passant par le moteur. De plus, sur ce type de vérin, il n'est pas possible d'installer un amortisseur quand l'actionneur part en extension.

On trouve aujourd'hui deux types de solutions pour amortir les chocs dans les cas d'utilisation de vérins électriques dans l'industrie lourde. Une solution à base d'élastomère, mais qui ne permet pas d'absorber l'énergie progressivement et qui de plus engendre des efforts importants, notamment au niveau de la vis interne du vérin, posant ainsi un problème de fiabilité. Une autre solution est à base de déformations mécaniques, mais elle est plus encombrante et de surcroit n'est utilisable qu'une seule fois sur un choc.

Ainsi, il n'existe pas de solution pour actionneur avec vérins électriques qui permette d'absorber et dissiper des énergies très importantes en cas de pannes.

En particulier, il n'existe pas de solution qui permette d'amortir les chocs en cas de panne extrême, subis par un simulateur monté sur un positionneur hexapode équipé d'actionneurs électriques.

Par ailleurs, il existe le besoin pour une solution qui limite les efforts engendrés afin de protéger la structure montée sur un positionneur hexapode, et qui limite les accélérations subies par l'équipage du simulateur. Enfin il est souhaitable que l'énergie qui est dissipée le soit sur une course minimum pour ne pas imputer la course utile des actionneurs.

La présente invention propose de répondre aux besoins précités.

### Résumé de l'invention

Un objet de la présente invention est de proposer un dispositif qui permet de sécuriser en cas de choc les mouvements des plateformes mobiles de positionneurs hexapodes. La présente invention concerne un actionneur linéaire actionné par commande électrique comme défini dans la revendication indépendante 1.

L'invention couvre aussi un positionneur hexapode comprenant un socle fixe et une plateforme mobile, le positionneur comprenant de plus six actionneurs linéaires tels que revendiqués. et comme défini dans la revendication indépendante 11.

L'invention a aussi pour objet un simulateur de vol monté sur un positionneur hexapode tel que revendiqué. et comme défini dans la revendication indépendante 12.

### Description des figures

Différents aspects et avantages de l'invention vont apparaitre en appui de la description d'un mode préféré d'implémentation de l'invention mais non limitatif, avec référence aux figures ci-dessous :
La figure 1 illustre schématiquement un vérin électrique de l'art antérieur ;
Les figures 2a et 2b illustrent schématiquement deux configurations de panne extrême pour un positionneur hexapode ;
La figure 3 illustre schématiquement un actionneur électrique avec amortisseur hydraulique conforme à l'invention ;
La figure 4 illustre schématiquement une configuration de panne extrême selon la figure 2a avec utilisation d'actionneurs hexapodes avec amortisseurs conformes à l'invention ;
La figure 5 représente un mode de réalisation d'un actionneur électrique avec amortisseur hydraulique conforme à l'invention ;
La figure 6 représente un autre mode de réalisation d'un actionneur électrique avec amortisseur hydraulique conforme à l'invention.

### Description détaillée de l'invention

D'une manière générale, l'invention propose un dispositif qui, en cas de panne extrême, permet d'amortir les chocs subis par une charge montée sur un positionneur hexapode équipé d'actionneurs électriques.

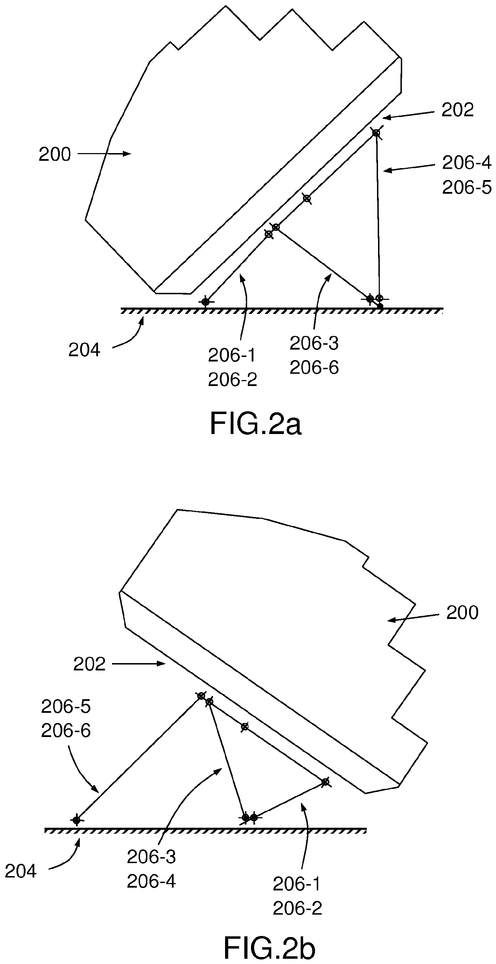

Pour illustrer la problématique résolue par l'invention, référence est faite aux figures 2a et 2b qui montrent schématiquement deux configurations de panne extrême dans le cas d'un positionneur hexapode. Par souci de clarté, les mêmes éléments portent les mêmes repères dans les différentes figures. Une charge 200 est montée sur une plateforme mobile 202 d'un positionneur hexapode qui comprend six actionneurs linéaires (206-1 à 206-6) reliant la plateforme mobile à un socle fixe 204. Les actionneurs permettent les mouvements de la charge selon six degrés de liberté.

Un premier cas très défavorable est celui où quatre actionneurs (206-3, 206-4, 206-5, 206-6) se retrouvent bloqués. Dans cette configuration, toute l'énergie se trouve alors concentrée sur les deux actionneurs restants (206-1 et 206-2). Les actionneurs restants peuvent se retrouver actionnés simultanément à vitesse maximum soit vers le bas comme illustré sur la figure 2a, soit vers le haut comme illustré sur la figure 2b. Les énergies déployées peuvent alors être de l'ordre de 8000 Joules. En considérant des actionneurs hydrauliques ayant des amortisseurs performants cela peut engendrer des efforts pouvant atteindre 30 tonnes sur chaque actionneur, et des accélérations de 1.5g.

Par ailleurs, il est aussi à noter que l'amortisseur haut pour des actionneurs utilisant des vérins hydrauliques est moins efficace. En effet, la chambre supérieure du vérin est plus petite que la chambre basse, dû au volume de la tige. L'énergie lors de l'amortissement est dissipée par le volume d'huile passant par la restriction. Il en résulte alors une efficacité moindre de l'amortisseur du haut en comparaison de l'amortisseur du bas.

Le problème qui se pose alors pour les actionneurs électriques est de comment dissiper cette énergie, tout en limitant les accélérations subies à des valeurs qui sont imposées par les réglementations.

La figure 3 illustre schématiquement un actionneur électrique avec amortisseur hydraulique 300 conforme à l'invention. Avantageusement, l'actionneur n'a pas de vis écrou, et est notamment adapté pour des utilisations dans les positionneurs hexapodes.

La demande de brevet EP 2 407 954 A2 du même déposant, décrit des configurations de positionneurs hexapodes comprenant des actionneurs électriques sans vis écrou. Un tel positionneur hexapode comprend généralement un socle fixe et une plateforme mobile qui est mise en mouvement via six actionneurs linéaires. Dans le cadre de l'invention, un positionneur hexapode comprend six actionneurs linéaires électriques avec amortisseur hydraulique 300. Une application avantageuse est celle des simulateurs avec cabine de pilotage montée sur la plateforme mobile, pour des simulateurs de vol ou de conduite.

L'actionneur 300 comprend une jambe ou bielle 302 de longueur fixe dont une extrémité supérieure 304 peut être rattachée à une plateforme mobile par une rotule à trois degrés de liberté en rotation, et une extrémité inférieure 306 peut être mobile le long d'un rail de guidage 308 qui peut être attaché à un socle fixe 309. Selon des variantes de réalisation, le rail de guidage est horizontal ou posé sur un plan incliné par rapport au socle fixe de manière à accroître les effets de déplacement vertical, longitudinal et latéral.

L'extrémité inférieure 306 de l'actionneur peut se déplacer sur le rail de guidage au moyen d'un chariot 310 actionné par un moteur ou motoréducteur 312 engrainant sur une courroie de transmission 314. Dans un mode de réalisation avantageuse, la courroie est à base de câbles d'acier et est crantée pour palier à un cas de panne très défavorable où la charge bougeant à sa vitesse maximum, il survient un blocage brutal du moteur en un endroit quelconque du rail. La courroie crantée permet alors une sécurité supplémentaire en sautant des dents et en amortissant un arrêt brutal qui peut créer un effort instantané très élevé.

L'actionneur électrique 300 de l'invention comprend de plus, au moins un amortisseur hydraulique 316. Avantageusement, l'amortisseur hydraulique est positionné sur l'actionneur de manière à ce qu'en cas de panne, les efforts engendrés par un amortissement soient subis uniquement par la charge portée par la plateforme mobile.

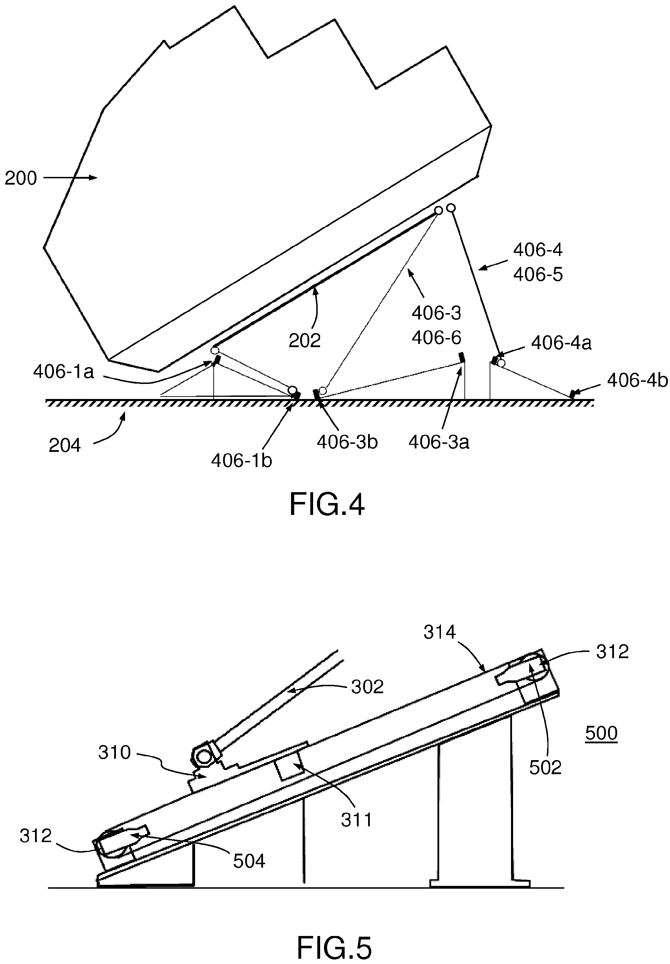

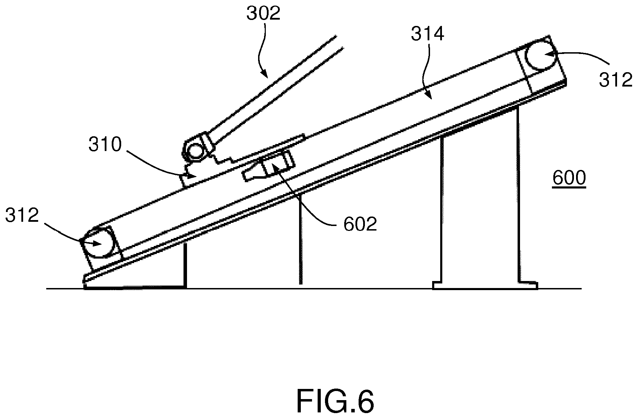

Selon des variantes de réalisation, dont deux sont décrites aux figures 5 et 6, l'amortisseur hydraulique peut être fixe ou mobile.

La figure 4 illustre schématiquement une configuration de panne extrême selon la figure 2a avec l'utilisation de six actionneurs (406-1 à 406-6) conformes à l'invention. Dans le cas illustré, chaque actionneur électrique est équipé de deux amortisseurs hydrauliques, placés chacun à une extrémité du rail de guidage. Pour des raisons de clarté, seuls les amortisseurs hydrauliques de trois actionneurs électriques sont représentés, à savoir les amortisseurs hydrauliques (406-1a, 406-1b) de l'actionneur 406-1, les amortisseurs hydrauliques (406-3a, 406-3b) de l'actionneur 406-3, et les amortisseurs hydrauliques (406-4a, 406-4b) de l'actionneur 406-4. Ainsi, la figure illustre que cette solution permet avantageusement de positionner des amortisseurs hydrauliques haut et bas qui sont totalement indépendants de l'actionneur. Dans les actionneurs à vis ou hydrauliques connus, les amortisseurs sont intégrés, et il n'est pas possible de les adapter à la charge, ni les changer en cas de problème.

Sur la figure 4, les amortisseurs (406-1a et 406-1b) sont positionnés sur les supports triangulaires fixés au sol. Lors de la configuration de panne extrême décrite, la charge vient frapper à vitesse maximum l'amortisseur du bas. Les efforts passent de la palette vers les bielles puis le chariot et enfin l'amortisseur. Il est à noter que le moteur et sa courroie qui fonctionnent en parallèle ne sont pas concernés. Cette configuration permet de protéger le réducteur et la courroie et il est ainsi possible de prendre en compte tous les cas de pannes, notamment le cas de la charge embarquée à vitesse maximum avec prise en compte simultanément de l'effort maximum du moteur.

Dans les solutions classiques de la figure 2, il n'est pas possible de prendre en compte l'énergie produite par l'effort maximum du moteur en plus de l'énergie cinétique. Le moteur doit être arrêté lors du choc par une information de fin de course qui peut être délivrée par un logiciel et enfin par un frein, qui a un temps de réponse. Toutes ces conditions ne sont pas sécurisantes.

Les amortisseurs de type hydraulique ou autre qui sont connus bien qu'étant efficaces, restent très encombrants. Dans le cas des figures 2a et 2b, il est impossible de les incorporer aux vérins, ou de les intégrer dans les actionneurs électriques.

Dans le dispositif de l'invention montré en figure 4, ces inconvénients sont levés car les amortisseurs se retrouvent sur la partie fixe du bâtit.

Ainsi, avantageusement, l'intérêt de la solution proposée est que les amortisseurs étant sur la partie fixe du bâtit, les efforts sont repris directement par ce dernier, et il n'y a pas de problème d'encombrement.

De manière préférentielle, l'invention intègre des amortisseurs hydrauliques à orifices calibrés car :
- ils ont l'efficacité des amortisseurs de vérins hydrauliques ;
- ils sont réutilisables sans dégradation ;
- ils sont adaptables en fonction de la charge ;
- ils permettent de protéger complètement le moteur et le réducteur lors du choc.

Le principe bien connu du mode opératoire de ce type d'amortisseur est que le piston vient comprimer progressivement un volume d'huile et par le calibrage des orifices, cela permet de dissiper progressivement l'énergie motrice et l'énergie cinétique, afin de maintenir une décélération constante. Ce système permet ainsi de réduire la décélération et ainsi de limiter au maximum les efforts sur la structure.

La figure 5 représente un mode de réalisation d'un actionneur électrique 500 conforme à l'invention ayant un amortisseur hydraulique haut 502 et un amortisseur hydraulique bas 504. Chaque amortisseur hydraulique est fixe, positionné à chaque extrémité du rail de guidage. Cette configuration permet d'avoir la même efficacité en cas de choc vers le haut ou vers le bas, ce qui n'est pas possible avec les amortisseurs connus des vérins électriques à vis.

Le chariot 310 sur lequel repose l'extrémité inférieure de la bielle 302, comprend une butée 311, positionnée sous le chariot dans l'axe des amortisseurs. En cas de choc, l'amortisseur haut ou bas frappe la butée. La courroie 314 et le motoréducteur directement relié à la poulie 312 ne voient alors que le couple moteur qui est limité. Le moteur et le réducteur sont ainsi protégés. En fonctionnement normal, l'effort exercé par la bielle est repris par le chariot, la courroie, la poulie et le motoréducteur.

Dans une variante de réalisation, deux amortisseurs hydrauliques fixes peuvent être positionnés côte à côte. Ils peuvent être à une extrémité du rail de guidage ou à chaque extrémité du rail de guidage, pour une utilisation en parallèle permettant alors d'absorber une grande quantité d'énergie sur une courte distance.

La figure 6 représente un autre mode de réalisation d'un actionneur électrique 600 conforme à l'invention ayant un seul amortisseur hydraulique 602 pour amortir les chocs vers le haut et vers le bas. L'amortisseur hydraulique est mobile et couplé à l'extrémité inférieure mobile de la jambe. Dans la configuration illustrée, l'amortisseur est positionné sous le chariot 310 sur lequel repose l'extrémité inférieure de la bielle 302. En cas de choc, l'amortisseur hydraulique vient frapper une butée haute ou basse du rail de guidage, et la courroie 314 et le motoréducteur 312 ne voient alors que le couple moteur qui est limité. Le moteur et le réducteur sont ainsi protégés.

Avantageusement, il est possible d'utiliser des amortisseurs réglables et de calibres différents suivant les charges. En effet le calibre et le type d'amortisseur peut être choisi en fonction de la quantité d'énergie à dissiper et du type d'énergie (énergie cinétique ou énergie motrice).

L'utilisation d'amortisseurs réglables permet qu'ils soient adaptés au cas le plus défavorable de l'application mise en place, correspondant à une configuration qui le plus souvent ne peut être finalisée que lors du montage final. Enfin, le type d'amortisseurs étant indépendant de l'actionneur, il est avantageux de sélectionner le type d'amortisseur hydraulique suivant la charge et les conditions d'exploitation.

Dans une réalisation concrète, pour un mouvement de cabine dit de 14 tonnes où les charges peuvent varier de 9 tonnes à 14 tonnes, les amortisseurs doivent être adaptés à la charge réelle et à l'inertie.

Dans le cas classique de la configuration de la figure 2 (2a ou 2b), avec un actionneur électrique avec vis à bille, l'amortisseur est intégré dans l'actionneur, et il ne peut être modifié sans changer complètement l'actionneur.

Dans le cas du dispositif de l'invention, l'amortisseur étant indépendant de l'actionneur, il peut alors être différent suivant les cas de charge, être adapté et réglé.

La présente description illustre différents modes de réalisation de l'invention, mais n'est pas limitative. Les exemples ont été choisis pour permettre une bonne compréhension des principes de l'invention, et une application concrète, mais ne sont pas exhaustifs et la description doit permettre à l'homme du métier d'apporter des modifications et variantes d'implémentation en gardant les mêmes principes. Ainsi par exemple, il est possible d'ajouter au dispositif, un capteur de position pour éviter que l'actionneur linéaire ne vienne percuter dangereusement la butée mécanique. Le capteur permet de détecter la position de l'actionneur près de la butée mécanique et se servir du moteur pour ralentir ou si nécessaire arrêter le système par son couple propre ou si besoin par un frein intégré. Bien que ces sécurités soient généralement mises en œuvre, les règlementations exigent d'avoir une sécurité absolue par un amortisseur physique qui assure que quelque soit la panne ou la fausse manœuvre la sécurité est assurée. La présente invention répond à cette exigence.

## Revendications

1. Actionneur linéaire (206-1 à 206-6) actionné par commande électrique et apte à être utilisé dans un positionneur hexapode, ledit positionneur hexapode comprenant six actionneurs linéaires (206-1 à 206-6) actionnés par commande électrique et où chaque actionneur a une jambe (302) de longueur fixe dont une extrémité supérieure (304) est rattachée à une plateforme mobile supportant une charge et dont l'autre extrémité inférieure (306) est mobile le long d'un rail de guidage, (308), chacun desdits six actionneurs linéaires étant **caractérisé en ce qu'**il comprend au moins un amortisseur hydraulique (502, 504, 602) à orifices calibrés positionné sur le rail de guidage, (308) le calibrage et la position dudit au moins un amortisseur hydraulique étant définis en fonction de ladite charge de manière à ce que les efforts engendrés par un amortissement en cas de panne extrême soient subis uniquement par ladite charge et soient répartis de façon à limiter les pics d'effort et d'accélération.

2. L'actionneur selon la revendication 1 dans lequel l'extrémité supérieure de la jambe est rattachée à une plateforme mobile par une rotule à trois degrés de liberté en rotation, et le rail de guidage est attaché à un socle fixe.

3. L'actionneur selon la revendication 2 **caractérisé en ce que** ledit au moins un amortisseur hydraulique est mobile sur le rail de guidage et couplé à l'extrémité inférieure mobile de la jambe.

4. L'actionneur selon la revendication 2 **caractérisé en ce que** ledit au moins un amortisseur hydraulique est fixe sur le rail de guidage.

5. L'actionneur selon la revendication 2 **caractérisé en ce qu'**il comprend deux amortisseurs hydrauliques fixes sur le rail de guidage.

6. L'actionneur selon la revendication 5 dans lequel les deux amortisseurs hydrauliques fixes sont positionnés côte à côte à une extrémité du rail de guidage.

7. L'actionneur selon la revendication 5 dans lequel les deux amortisseurs hydrauliques fixes sont positionnés à chaque extrémité du rail de guidage.

8. L'actionneur selon l'une quelconque des revendications 2 à 7 dans lequel l'extrémité inférieure de la jambe se déplace sur le rail de guidage au moyen d'un chariot actionné par un moteur engrainant sur une courroie.

9. L'actionneur selon la revendication 8 dans lequel la courroie est crantée.

10. L'actionneur selon l'une quelconque des revendications 2 à 9 dans lequel le rail de guidage est sur un plan incliné par rapport au socle fixe.

11. Positionneur hexapode comprenant un socle fixe et une plateforme mobile, le positionneur comprenant de plus six actionneurs linéaires selon l'une quelconque des revendications 1 à 10.

12. Simulateur de vol monté sur un positionneur hexapode selon la revendication 11.

## Patentansprüche

1. Linearstellglied (206-1 bis 206-6), welches durch elektrische Ansteuerung betätigt wird und in der Lage ist, in einem Sechsbein-Positioniergerät verwendet zu werden, wobei das Sechsbein-Positioniergerät sechs Linearstellglieder (206-1 bis 206-6) umfasst, welche durch elektrische Ansteuerung betätigt werden, und wobei jedes Stellglied ein Bein (302) fester Länge aufweist, dessen ein oberes Ende (304) mit einer beweglichen Stützplattform verbunden ist, welche eine Last stützt, und dessen anderes unteres Ende (306) entlang einer Führungsschiene (308) beweglich ist, wobei jedes der sechs Linearstellglieder **dadurch gekennzeichnet ist, dass** es mindestens einen hydraulischen Dämpfer (502, 504, 602) mit kalibrierten Öffnungen umfasst, welcher auf der Führungsschiene (308) positioniert ist, wobei die Kalibrierung und die Position des mindestens einen hydraulischen Dämpfers entsprechend der Last so definiert sind, dass die durch eine Dämpfung im Fall einer extremen Störung erzeugten Kräfte nur durch die Last erfahren werden, und so verteilt werden, dass die Kraft- und Beschleunigungsspitzen begrenzt werden.

2. Stellglied nach Anspruch 1, wobei das obere Ende des Beins mit einer beweglichen Plattform durch ein Kniegelenk mit drei Freiheitsgraden in Drehung verbunden ist, und die Führungsschiene an einem festen Sockel befestigt ist.

3. Stellglied nach Anspruch 2, **dadurch gekennzeichnet, dass** der mindestens eine hydraulische Dämpfer auf der Führungsschiene beweglich und mit dem unteren beweglichen Ende des Beins gekoppelt ist.

4. Stellglied nach Anspruch 2, **dadurch gekennzeichnet, dass** der mindestens eine hydraulischen Dämpfer an der Führungsschiene fest ist.

5. Stellglied nach Anspruch 2, **dadurch gekennzeichnet, dass** es zwei an der Führungsschiene feste hydraulische Dämpfer umfasst.

6. Stellglied nach Anspruch 5, wobei die beiden festen hydraulischen Dämpfer nebeneinander an einem Ende der Führungsschiene positioniert sind.

7. Stellglied nach Anspruch 5, wobei die beiden festen hydraulischen Dämpfer an jedem Ende der Führungsschiene positioniert sind.

8. Stellglied nach einem der Ansprüche 2 bis 7, wobei das untere Ende des Beins sich auf der Führungsschiene mithilfe eines Wagens bewegt, welcher durch einen Motor betätigt wird, welcher auf einen Riemen eingreift.

9. Stellglied nach Anspruch 8, wobei der Riemen gezahnt ist.

10. Stellglied nach einem der Ansprüche 2 bis 9, wobei die Führungsschiene auf einer schrägen Ebene in Bezug auf den festen Sockel ist.

11. Sechsbein-Positioniergerät, umfassend einen festen Sockel und eine bewegliche Plattform, wobei das Positioniergerät ferner sechs lineare Stellglieder nach einem der Ansprüche 1 bis 10 umfasst.

12. Flugsimulator, welche auf einem Sechsbein-Positioniergerät nach Anspruch 11 montiert ist.

## Claims

1. A linear actuator (206-1 to 206-6) actuated by electric control and able to be used in a hexapod positioner, said hexapod positioner comprising six linear actuators (206-1 to 206-6) actuated by electric control and wherein each actuator has a leg (302) of fixed length, an upper end (304) of which is attached to a moving platform supporting a load and the other, lower end (306) of which is moving along a guide rail (308), each of said six linear actuators being **characterised in that** it comprises at least one hydraulic damper (502, 504, 602) with calibrated orifices that is positioned on the guide rail (308), the calibration and the position of said at least one hydraulic damper being defined as a function of said load such that the forces generated by damping in the event of extreme breakdown are experienced only by said load and are distributed such as to limit force and acceleration peaks.

2. The actuator according to claim 1, wherein the upper end of the leg is attached to a movable platform by a ball joint with three degrees of freedom in rotation and the guide rail is attached to a fixed base.

3. The actuator according to claim 2, **characterised in that** said at least one hydraulic damper is movable on the guide rail and coupled to the lower moving end of the leg.

4. The actuator according to claim 2, **characterised in that** said at least one hydraulic damper is fixed on the guide rail.

5. The actuator according to claim 2, **characterised in that** it comprises two hydraulic dampers fixed on the guide rail.

6. The actuator according to claim 5, wherein the two fixed hydraulic dampers are positioned side-by-side at one end of the guide rail.

7. The actuator according to claim 5, wherein the two fixed hydraulic dampers are positioned at each end of the guide rail.

8. The actuator according to any one of claims 2 to 7, wherein the lower end of the leg moves on the guide rail by means of a carriage actuated by a motor meshing on a belt.

9. The actuator according to claim 8, wherein the belt is notched.

10. The actuator according to any one of claims 2 to 9, wherein the guide rail is on a plane that is inclined relative to the fixed base.

11. A hexapod positioner comprising a fixed base and a moving platform, the positioner furthermore comprising six linear actuators according to any one of claims 1 to 10.

12. A flight simulator mounted on a hexapod positioner according to claim 11.
